# EUROPÄISCHE PATENTSCHRIFT

(11) **EP 2 424 916 B1**
(45) Veröffentlichungstag und Bekanntmachung des Hinweises auf die Patenterteilung: **28.11.2012**
(21) Anmeldenummer: 10710562.9
(22) Anmeldetag: 16.03.2010
(51) Int. Cl.: C08G 59/40, C08G 59/68

(54) **KATALYSE VON EPOXIDHARZFORMULIERUNGEN**
CATALYSIS OF EPOXY RESIN FORMULATIONS
CATALYSE DE FORMULATIONS DE RÉSINES ÉPOXY

(30) Priorität: 29.04.2009 DE 102009002711; 20.07.2009 DE 102009027826
(43) Veröffentlichungstag der Anmeldung: 07.03.2012
(73) Patentinhaber: Evonik Degussa GmbH, 45128 Essen (DE)
(72) Erfinder: SPYROU, Emmanouil, 46514 Schermbeck (DE); LOESCH, Holger, 44627 Herne (DE); EBBING-EWALD, Marion, 45768 Marl (DE); DIESVELD, Andrea, 48712 Gescher (DE)
(86) Internationale Anmeldenummer: PCT/EP2010/053357
(87) Internationale Veröffentlichungsnummer: WO 2010/124901

(56) Entgegenhaltungen:
- EP-A1- 0 543 466
- WO-A2-96/12752
- DD-A1- 241 605

## Beschreibung

Gegenstand der vorliegenden Erfindung sind Epoxidharzformulierungen mit einer speziellen Katalysatormischung zur Reaktivitätssteigerung.

Die Verwendung von latenten Härtern, z. B. Dicyandiamid, zur Härtung von Epoxidharzen ist bekannt (z. B. US 2,637,715 oder US 3,391,113). Die Vorteile von Dicyandiamid liegt vor allem in der toxikologischen Unbedenklichkeit sowie in dem chemisch inertem Verhalten, welches zu einer guten Lagerstabilität führt.

Anderseits war diese geringe Reaktivität immer wieder Anlass, Katalysatoren, sogenannte Beschleuniger, zu entwickeln, um diese Reaktivität zu steigern, so dass die Aushärtung schon bei geringeren Temperaturen stattfinden kann. Dies spart Energie, erhöht die Taktzeit und schont vor allem temperaturempfindliche Untergründe. Als Beschleuniger sind eine ganze Reihe von unterschiedlichen Substanzen bereits beschrieben worden, z. B. tertiäre Amine, Imidazole, substituierte Harnstoffe (Urone) und viele mehr.

So werden in der DD 241605 quartäre Ammoniumsalze als Beschleuniger vorgeschlagen. Dabei werden jedoch keine Unterscheidungen bezüglich des Anions getroffen. Aufgeführt und in Beispielen beschrieben sind lediglich Hydroxide und Halogenide. Letztere sind aber recht reaktionsträge. Auch sind in dieser Patentschrift keine "Moderatoren" wie z. B. Säuren erwähnt - also Stoffe, die die beschleunigende Wirkung regeln können, und daher zur Verlängerung der Lagerstabilität beitragen können.

Auch in der Patentschrift EP 458 502 werden quartäre Ammoniumsalze als Beschleuniger beschrieben. Hier werden als Anionen Halogenide, Hydroxide und aliphatische Säurereste genannt. Als Moderatoren kommen Borsäure oder Maleinsäure in Betracht.

Trotz der Vielzahl der eingesetzten Systeme besteht immer noch Bedarf an Katalysatoren, die zwar die Reaktivität erhöhen, die Lagerstabilität aber nicht wesentlich in Mitleidenschaft zieht.

Aufgabe der vorliegenden Erfindung war es daher, Beschleuniger für Epoxidharzsysteme bereitzustellen, welche die genannten Nachteile nicht aufweisen, sondern bei der Härtungstemperatur eine hohe Reaktivität besitzen sowie ein gute Lagerstabilität unterhalb der Härtungstemperatur.

Überraschend wurde gefunden, dass reaktive Epoxidharzsysteme mit latenten Härtern dann eine vorteilhafte Balance aus Reaktivität und Lagerstabilität aufweisen, wenn als Beschleuniger eine Mischung aus quartären Ammoniumsalzen mit aromatischen Säuren als Anion und einer Säure als Moderator verwendet wird.

Gegenstand der Erfindung sind reaktive Zusammensetzungen im Wesentlichen enthaltend
A) mindestens ein Epoxydharz;
B) mindestens einen latenten Härter, der bei der unkatalysiert Reaktion mit der Komponente A) in der DSC das Maximum des exothermen Reaktionspeaks bei Temperaturen oberhalb von 150 °C aufweist;
C) mindestens einen Beschleuniger, bestehend aus der Kombination von
   C1) quartären Ammoniumsalzen mit aromatischen Säuren als Gegenion
      und
   C2) einer monomeren oder polymeren, organischen oder anorganischen Säure;
D) optional sonstige üblichen Zuschlagstoffen.

Epoxydharze A) bestehen in der Regel aus Glycidylethern basierend auf Bisphenolen auf Basis Typ A oder F sowie auf Basis von Resorcinol oder Tetrakisphenylolethan oder Phenol/Cresol-Formaldehyd Novolacken, wie sie z. B. in Lackharze, Stoye /Freitag, Carl Hanser Verlag, München Wien, 1996 auf den S. 230 bis 280 beschrieben werden. Auch andere dort genannte Epoxidharze kommen natürlich in Frage. Als Beispiele seien genannt: EPIKOTE 828, EPIKOTE 834, EPIKOTE 835, EPIKOTE 836, EPIKOTE 1001, EPIKOTE 1002, EPIKOTE 154, EPIKOTE 164, EPON SU-8 (EPIKOTE und EPON sind Handelsnamen von Produkten von Resolution Performance Products).

Als Epoxidharzkomponente A) kommen bevorzugt Polyepoxide auf Basis von Bisphenol-A-diglycidylether, Bisphenol-F-diglycidylether oder cycloaliphatische Typen zum Einsatz.

Vorzugsweise werden in erfindungsgemäßer härtbarer Zusammensetzung Epoxidharze A) eingesetzt, ausgewählt aus der Gruppe umfassend Epoxidharze A) auf Basis von Bisphenol A-diglycidylether, Epoxidharze auf Basis von Bisphenol F-diglycidylether und cycloaliphatische Typen wie z. B. 3,4-Epoxycyclohexylepoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind.
Erfindungsgemäß können auch Mischungen von Epoxidharzen als Komponente A) eingesetzt werden.

Latente Härter B) (siehe auch EP 682 053) sind entweder recht wenig reaktiv insbesondere bei niedrigen Temperaturen, oder aber schlecht löslich, häufig sogar beides. Geeignet sind erfindungsgemäß latente Härter, welche bei der unkatalysierten Reaktion (Härtung) mit der Komponente A) das Maximum des exothermen Reaktionspeaks bei Temperaturen oberhalb von 150 °C aufweisen, und wobei solche, die das Maximum des exothermen Reaktionspeaks bei Temperaturen oberhalb 170 °C aufweisen besonders geeignet sind (Gemessen mittels DSC, Beginn bei Umgebungstemperatur (üblicherweise bei 25 °C), Aufheizgeschwindigkeit 10 K/min, Endpunkt 250 °C). In Frage kommen dabei Härter wie sie in US 4,859,761 oder EP 306 451 beschreiben werden. Bevorzugt werden substituierte Guanidine und aromatische Amine eingesetzt. Häufigster Vertreter der substituierten Guanidine ist das Dicyandiamid. Auch andere substituierte Guanidine lassen sich Einsetzen, z. B. Benzoguanamin oder o-Tolylbiguanidin. Häufigster Vertreter der aromatischen Amine ist das 4,4'-Diaminodiphenylsulfon. Auch andere aromatische Diamine kommen in Frage, z. B. 3,3'-Diaminodiphenylsulfon, 4,4'-Methylendiamin, 1,2- oder 1,3- oder 1,4-Benzendiamine, Bis-(4-aminophenyl)-1,4-diisopropylbenzen (z. B. EPON 1061 von Shell), Bis-(4-amino-3,5-dimethylphenyl)-1,4-diisopropylbenzen (z. B. EPON 1062 von Shell), Diaminodiphenylether, Diaminobenzophenone, 2,6-Diaminopyridin, 2,4-Toluendiamin, Diaminodiphenylpropane, 1,5-Diaminonaphthalin, Xylendiamine, 1,1-Bis-4-Aminophenylcyclohexan, Methylene-bis-(2,6-diethylanilin) (z. B. LONZACURE M-DEA von Lonza), Methylene-bis-(2-isopropyl,6-methylanilin) (z. B. LONZACURE M-MIPA von Lonza), Methylene-bis-(2,6-diisopropylanilin) (z. B. LONZACURE M-DIPA von Lonza), 4-Aminodiphenylamin, Diethyltoluendiamin, Phenyl-4,6-diaminotriazin, Lauryl-4,6-diaminotriazin.
Geeignete latente Härter sind ebenfalls N-Acylimidazole, wie z. B. 1-(2',4',6'-Trimethylbenzoyl)-2-phenylimidazol oder 1-Benzoyl-2-isopropylimidazol. Derartige Verbindungen sind beispielsweise in US 4,436,892 und US 4,587,311 beschrieben.

Weitere geeignete Härter sind Metallsalzkomplexe von Imidazolen, wie z. B. in der US 3,678,007 oder US 3,677,978 beschrieben, Carbonsäurehydrazide, wie z. B. Adipinsäuredihydrazid, Isophthalsäuredihydrazid oder Anthranilsäurehydrazid, Triazinderivate, wie z.B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z. B. in der US 3,030,247 beschrieben.

Als latente Härter geeignet sind auch Cyanacetylverbindungen, wie z. B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z. B. N,N'-Dicyanadipinsäurediamid. Solche Verbindungen sind z.B. in den US 4,529,821, US 4,550,203 und US 4,618,712 beschrieben.

Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-dimethylcarbamid).

Natürlich können auch aliphatische oder cycloaliphatischen Di- und Polyamine verwendet werden, falls sie nur reaktionsträge genug sind. Als Beispiel seien hier Polyetheramine genannt, wie z. B. die JEFFAMINE 230 und 400. Denkbar ist auch die Verwendung von aliphatischen oder cycloaliphatischen Di- oder Polyaminen, deren Reaktivität durch sterische und oder elektronische Einflussfaktoren herabgesetzt wurde oder/und aber schlecht löslich bzw. hochschmelzend sind, z.B. JEFFLINK 754 (Huntsman) oder CLEARLINK 1000 (Dorf Ketal).

Natürlich können auch Mischungen von latenten Härtern verwendet werden. Bevorzugt werden Dicyandiamid und 4,4'-Diaminodiphenylsulfon verwendet.

Das Mengenverhältnis zwischen dem Epoxidharz und dem latenten Härter kann über einen weiten Bereich variiert werden. Es hat sich jedoch als vorteilhaft erwiesen, den latenten Härter etwa 1 - 15 Gew.-% bezogen auf das Epoxidharz einzusetzen, bevorzugt 4 - 10 Gew.-%.

Als quartäre Ammoniumsalze C1) kommen alle kationisch geladenen tetrasubstituierten Stickstoffverbindungen, bevorzugt Tetraalkylammoniumsalze, in Frage, die als Anion eine aromatische Säure aufweisen. Bevorzugte Beispiele für solche Verbindungen sind Tetrabutylammoniumbenzoat, Benzyltrimethylammoniumbenzoat und Tetraethylammoniumbenzoat. Besonders bevorzugt wird Tetraethylammoniumbenzoat eingesetzt.
Diese Katalysatoren können für eine bessere Verarbeitbarkeit auch auf einen festen Träger, z. B. Kieselsäure aufgezogen sein, um damit den Auswirkungen einer möglichen Hygroskopie, entgegen zu wirken. Solche Produkte sind z.B. bei Evonik Degussa GmbH als VESTAGON EP SC 5050 bekannt.
Die Menge an C1) bezogen auf das Epoxidharz beträgt 0,1 - 5 Gew.-%, bevorzugt 0,3 - 2 Gew.-%, besonders bevorzugt 0,5 - 1,0 Gew.-%.

Für C2) können alle Säuren verwendet werden, fest oder flüssig, organisch oder anorganisch, monomer oder polymer, die die Eigenschaften einer Brönstedt- oder einer Lewissäure besitzen. Als Beispiele seien genannt: Schwefelsäure, Essigsäure, Benzoesäure, Bernsteinsäure, Malonsäure, Terephthalsäure, Isopthalsäure, Oxalsäure, Borsäure, aber auch Copolyester oder Copolyamide mit einer Säurezahl von mindestens 20. Bevorzugt werden monomere organische Säuren, insbesondere Oxalsäure und/oder Bernsteinsäure. Die Menge an C2) bezogen auf das Epoxidharz beträgt 0,01 - 10 Gew.-%, bevorzugt 0,10 - 1,0 Gew.-%, besonders bevorzugt 0,15 - 0,5 Gew.-%.

Übliche Zuschlagstoffe D) können Lösemittel, Pigmente, Verlaufhilfsmittel, Mattierungsmittel sowie weitere übliche Beschleuniger, z. B. Urone oder Imidazole sein. Die Menge dieser Zuschlagsstoffe kann je nach Anwendung stark variieren.

Gegenstand der vorliegenden Erfindung ist auch die Verwendung der beanspruchten reaktiven Zusammensetzungen z. B. in Faserverbundwerkstoffen, in Klebstoffen, in Elektrolaminaten sowie in Pulverlacken sowie Gegenstände, welche eine erfindungsgemäße reaktive Zusammensetzung enthalten.

Zur Herstellung der erfindungsgemäßen Zusammensetzung werden die Komponenten in geeigneten Vorrichtungen homogenisiert, z.B. in Rührkesseln, Intensivmischer, Intensivkneter, statischem Mischer oder in Extrudern, in der Regel unter erhöhten Temperaturen (70 - 130 °C).
Im Falle von Pulverlackanwendungen wird die erkaltete Mischung gebrochen, gemahlen und gesiebt.

Die erfindungsgemäße Zusammensetzung zeichnet sich durch besondere Lagerstabilität aus, insbesondere liegt die Viskositätssteigerung nach 8 Stunden bei 60 °C nicht über 50 % des Ausgangswertes. Außerdem ist die erfindungsgemäße Zusammensetzung auf Grund der erfindungsgemäß enthaltenen Komponente C), also des Beschleunigers, mindestens so reaktiv, dass nach 30 Minuten 140 °C eine vollständige Vernetzung stattgefunden hat.

Je nach Anwendungsgebiet kann die reaktive Zusammensetzung auf geeignete Art und Weise aufgetragen werden, z. B. gerakelt, gestrichen, gestreut, gespritzt, gesprüht, gegossen, geflutet oder getränkt.
Im Falle von Pulverlacken z. B. wird das gesiebte Pulver elektrostatisch aufgeladen und dann auf das zu beschichtende Substrat aufgesprüht.

Nach dem Aufbringen der reaktiven Zusammensetzung auf das Substrat kann die Aushärtung bei erhöhter Temperatur in einer oder in mehreren Stufen, mit oder ohne Druck, erfolgen. Die Aushärtungstemperatur liegt zwischen 70 und 220 °C, üblicherweise zwischen 120 und 180 °C. Die Aushärtungszeit liegt dabei zwischen 1 Minute und mehreren Stunden, üblicherweise zwischen 5 Minuten und 30 Minuten, je nach Reaktivität und Temperatur.

Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| EPIKOTE 828 | Komponente A) Diglycidylether von Bisphenol A, Resolution |
| DYHARD SF 100 | Komponente B) Dicyandiamid, Evonik Degussa GmbH |
| TEAB | Komponente C1) Tetraethylammoniumbenzoat, Evonik Degussa GmbH |
| TBACI | Tetrabutylammoniumchlorid, Aldrich |
| TMAAc | Tetramethylammoniumacetat, Aldrich |
| Oxalsäure | Komponente C2) Aldrich |

Alle Formulierungsbestandteile wurden in einer Glasflasche mittel eines Magnetrührers sehr gut vermischt und dann mit Hilfe einer Viskositätsmessung auf Lagerstabilität und mit Hilfe einer Aushärtung in einer Beschichtung auf Reaktivität getestet.

### Zusammensetzung

Alle Angaben in Gew.-%

| | **1*** | **2*** | **3** | **4*** | **5*** |
|---|---|---|---|---|---|
| EPIKOTE 828 | 95 | 94 | 93,8 | 93,8 | 93,8 |
| DYHARD SF 100 | 5 | 5 | 5 | 5 | 5 |
| TEAB | | 1 | 1 | | |
| Oxalsäure | | | 0,2 | 0,2 | 0,2 |
| TBACI | | | | 1 | |
| TMAAc | | | | | 1 |

| | | | | | |
|---|---|---|---|---|---|
| * nicht erfindungsgemäße Vergleichsversuche | | | | | |

### a) Lagerstabilität

| Nr.: | Viskosität bei 23 °C nach Lagerung im Umluft-Trockenschrank [Pas] | | | | |
|---|---|---|---|---|---|
| | Start | 2h 60 °C | 4h 60 °C | 6h 60 °C | 8h 60 °C (Anstieg verglichen mit Start) |
| 1 * | 22 | 23 | 23 | 23 | 23 (5 %) |
| 2* | 20 | 29 | 68 | 333 | 3391 (17000 %) |
| 3 | 16 | 17 | 18 | 19 | 19 (19 %) |
| 4* | 15 | 16 | 16 | 16 | 16(7%) |
| 5* | 15 | 16 | 16 | 21 | 30 (100 %) |

| | | | | | |
|---|---|---|---|---|---|
| * nicht erfindungsgemäße Vergleichsversuche | | | | | |

Die Zusammensetzungen 1,3 und 4 sind lagerstabil (Viskositätszuwachs nach 8 h bei 60 °C nicht größer als 50 %), 2 und 5 sind nicht lagerstabil (Viskositätszuwachs nach 8 h bei 60 °C größer als 50 %).

### b) Reaktivität

Die Zusammensetzungen 1,3, 4 und 5 wurden auf Stahlbleche aufgerakelt und bei 30 min 140 °C im Umluftofen ausgehärtet. Dabei ergaben sich folgende Lackdaten:

| **Nr.** | **1*** | **3** | **4*** | **5*** |
|---|---|---|---|---|
| Schichtdicke [µm] | 38 - 42 | 32 - 42 | 31 - 38 | 27 - 39 |
| Erichsentiefung [mm] | 0,5 | 7,5 | 0,5 | 5,5 |
| Kugelschlag dir/indir [inch*lbs] | < 10 / < 10 | 40 / 30 | < 10 / < 10 | 20 / 20 |
| Gitterschnitt (0: keine, 5: vollständige Ablösung) | 5 | 0 | 5 | 5 |
| MEK-Test (Doppelhübe) | 8 | > 100 | 15 | > 100 |
| Bemerkung | Nicht ausgehärtet | ausgehärtet | Nicht ausgehärtet | ausgehärtet |

| | | | | |
|---|---|---|---|---|
| * nicht erfindungsgemäße Vergleichsversuche Erichsentiefung nach DIN 53 156 Kugelschlag nach ASTM D 2794-93 Pendelhärte nach DIN 53 157 Gitterschnitt nach DIN 53 151 MEK-Test: Methylethylketon-Beständigkeitstest durch Reiben mit einem in MEK getränkten Wattebausch mit 1 kg Auflage bis zur Auflösung der Schicht (gezählt werden Doppelhübe) | | | | |

Die Zusammensetzungen 1 und 4 sind nicht ausgehärtet: Die Flexibilität (Erichsentiefung < 5 mm, Kugelschlag < 10 mm) ist nicht ausreichend und die Chemikalienbeständigkeit (MEK Test < 100 Doppelhübe) zu gering.
Die Zusammensetzungen 3 und 5 sind ausgehärtet: Die Flexibilität (Erichsentiefung > 5 mm, Kugelschlag > 10 inch*lbs) ist ausreichend und die
Chemikalienbeständigkeit (MEK Test > 100 Doppelhübe) genügend.

Lediglich die erfindungsgemäße Zusammensetzung 3 ist sowohl lagerstabil als auch ausreichend reaktiv.

## Patentansprüche

1. Reaktive Zusammensetzung im Wesentlichen enthaltend
A) mindestens ein Epoxydharz;
B) mindestens einen latenten Härter, der bei der unkatalysiert Reaktion mit der Komponente A) in der DSC das Maximum des exothermen Reaktionspeaks bei Temperaturen oberhalb von 150 °C aufweist;
C) mindestens einen Beschleuniger, bestehend aus der Kombination von
C1) quartären Ammoniumsalzen mit aromatischen Säuren als Gegenion und
C2) einer monomeren oder polymeren, organischen oder anorganischen Säure.

2. Reaktive Zusammensetzung nach Anspruch 1,
**dadurch gekennzeichnet, dass**
D) sonstige übliche Zuschlagstoffe enthalten sind.

3. Reaktive Zusammensetzung nach mindestens einem der vorherigen Ansprüche,
**dadurch gekennzeichnet,**
**dass** Epoxydharze A) aus Glycidylethern basierend auf Bisphenolen auf Basis Typ A oder F und/oder auf Basis von Resorcinol und/oder Tetrakisphenylolethan und/oder Phenol/Cresol-Formaldehyd Novolacken enthalten sind.

4. Reaktive Zusammensetzung nach mindestens einem der vorherigen Ansprüche,
**dadurch gekennzeichnet,**
**dass** Epoxidharze A) auf Basis von Bisphenol A-diglycidylether, Epoxidharze auf Basis von Bisphenol F-diglycidylether und/oder cycloaliphatische Typen enthalten sind.

5. Reaktive Zusammensetzung nach mindestens einem der vorherigen Ansprüche,
**dadurch gekennzeichnet,**
**dass** als latente Härter B) substituierte Guanidine und/oder aromatische Amineenthalten sind.

6. Reaktive Zusammensetzung nach mindestens einem der vorherigen Ansprüche,
**dadurch gekennzeichnet,**
**dass** als latente Härter B) 3,3'-Diaminodiphenylsulfon, 4,4'-Methylendiamin, 1,2-oder 1,3- oder 1,4-Benzendiamine, Bis-(4-aminophenyl)-1,4-diisopropylbenzen (z. B. EPON 1061 von Shell), Bis-(4-amino-3,5-dimethylphenyl)-1,4-diisopropylbenzen, Diaminodiphenylether, Diaminobenzophenone, 2,6-Diaminopyridin, 2,4-Toluendiamin, Diaminodiphenylpropane, 1,5-Diaminonaphthalin, Xylendiamine, 1,1-Bis-4-Aminophenylcyclohexan, Methylene-bis-(2,6-diethylanilin), Methylene-bis-(2-isopropyl,6-methylanilin), Methylene-bis-(2,6-diisopropylanilin), 4-Aminodiphenylamin, Diethyltoluendiamin, Phenyl-4,6-diaminotriazin und/oder Lauryl-4,6-diaminotriazin enthalten sind.

7. Reaktive Zusammensetzung nach mindestens einem der vorherigen Ansprüche,
**dadurch gekennzeichnet,**
**dass** als C1) Tetraalkylammoniumsalze enthalten sind.

8. Reaktive Zusammensetzung nach mindestens einem der vorherigen Ansprüche,
**dadurch gekennzeichnet,**
**dass** als C2) Schwefelsäure, Essigsäure, Benzoesäure, Bernsteinsäure, Malonsäure, Terephthalsäure, Isophthalsäure, Oxalsäure, Borsäure, oder Copolyester oder Copolyamide mit einer Säurezahl von mindestens 20, allein oder in Mischungen, enthalten sind.

9. Reaktive Zusammensetzung nach mindestens einem der vorherigen Ansprüche,
**dadurch gekennzeichnet,**
**dass** als C2) Oxalsäure und/oder Bernsteinsäure enthalten sind.

10. Reaktive Zusammensetzung nach mindestens einem der vorherigen Ansprüche,
**dadurch gekennzeichnet,**
**dass** die Menge an C1) bezogen auf das Epoxidharz 0,1-5 Gew.-% beträgt.

11. Reaktive Zusammensetzung nach mindestens einem der vorherigen Ansprüche,
**dadurch gekennzeichnet,**
**dass** die Menge an C2) bezogen auf das Epoxidharz 0,01-10 Gew.-% beträgt.

12. Reaktive Zusammensetzung nach mindestens einem der vorherigen Ansprüche,
**dadurch gekennzeichnet,**
**dass** als Zuschlagstoffe D) Lösemittel, Pigmente, Verlaufhilfsmittel, Mattierungsmittel, und/oder Beschleuniger enthalten sind.

13. Reaktive Zusammensetzung nach mindestens einem der vorherigen Ansprüche, mit einer Lagerstabilität, wobei die Viskositätssteigerung nach 8 Stunden bei 60 °C nicht über 50 % des Ausgangswertes liegt.

14. Reaktive Zusammensetzung nach mindestens einem der vorherigen Ansprüche, wobei die erfindungsgemäße Zusammensetzung mindestens so reaktiv ist, dass nach 30 Minuten bei 140 °C eine vollständige Vernetzung stattgefunden hat.

15. Verfahren zur Herstellung der reaktiven Zusammensetzung nach Anspruch 1 bis 14 durch Homogenisierung.

16. Verwendung der reaktiven Zusammensetzung nach Anspruch 1 bis 15 in Faserverbundwerkstoffen, in Klebstoffen, in Elektrolaminaten sowie in Pulverlacken.

17. Gegenstände enthaltend eine reaktive Zusammensetzung nach Anspruch 1 bis 15.

## Claims

1. Reactive composition containing essentially
A) at least one epoxy resin;
B) at least one latent hardener which, uncatalyzed, starts to react at temperatures greater than 150°C;
C) at least one accelerator consisting of a combination of
C1) quaternary ammonium salts having aromatic acids as counterion
and
C2) a monomeric or polymeric, organic or inorganic acid.

2. Reactive composition according to Claim 1, **characterized in that**,
D) other conventional additives are present.

3. Reactive composition according to at least one of the preceding claims,
**characterized in that**
epoxy resins A) composed of glycidyl ethers based on bisphenols of type A or F and/or based on resorcinol and/or tetrakisphenylolethane and/or phenol/cresol-formaldehyde novolaks are present.

4. Reactive composition according to at least one of the preceding claims, **characterized in that** epoxy resins A) based on bisphenol A diglycidyl ether, epoxy resins based on bisphenol F diglycidyl ether and/or cycloaliphatic types are present.

5. Reactive composition according to at least one of the preceding claims, **characterized in that** substituted guanidines are present as latent hardeners B).

6. Reactive composition according to at least one of the preceding claims, **characterized in that** bis(3-aminophenyl) sulfone, 4,4'-methylenediamine, 1,2- or 1,3- or 1,4-benzenediamines, bis(4-aminophenyl)-1,4-diisopropylbenzene (e.g. EPON 1061 from Shell), bis(4-amino-3,5-dimethylphenyl)-1,4-diisopropylbenzene, bis(aminophenyl) ether, diaminobenzophenones, 2,6-diaminopyridine, 2,4-toluenediamine, diaminodiphenylpropanes, 1,5-diaminonaphthalene, xylenediamines, 1,1-bis-4-aminophenylcyclohexane, methylenebis(2,6-diethylaniline), methylenebis(2-isopropyl-6-methylaniline), methylenebis(2,6-diisopropylaniline), 4-aminodiphenylamine, diethyltoluenediamine, phenyl-4,6-diaminotriazine and/or lauryl-4,6-diaminotriazine are present as latent hardeners B).

7. Reactive composition according to at least one of the preceding claims, **characterized in that** tetraalkylammonium salts are present as C1).

8. Reactive composition according to at least one of the preceding claims, **characterized in that** sulfuric acid, acetic acid, benzoic acid, succinic acid, malonic acid, terephthalic acid, isophthalic acid, oxalic acid, boric acid or copolyesters or copolyamides having an acid number of at least 20, either alone or in mixtures, are present as C2).

9. Reactive composition according to at least one of the preceding claims, **characterized in that** oxalic acid and/or succinic acid are present as C2).

10. Reactive composition according to at least one of the preceding claims,
**characterized in that**
the amount of C1) based on the epoxy resin is 0.1-5% by weight.

11. Reactive composition according to at least one of the preceding claims, **characterized in that** the amount of C2) based on the epoxy resin is 0.01-10% by weight.

12. Reactive composition according to at least one of the preceding claims, **characterized in that** solvents, pigments, leveling agents, matting agents and/or accelerators, are present as additives D).

13. Reactive composition according to at least one of the preceding claims which is storage-stable, with the viscosity increase after 8 hours at 60°C being not more than 50% of the initial value.

14. Reactive composition according to at least one of the preceding claims, wherein the composition of the invention is at least so reactive that complete crosslinking has taken place after 30 minutes at 140°C.

15. Process for producing the reactive composition according to any of Claims 1 to 14 by homogenization.

16. Use of the reactive composition according to any of Claims 1 to 15 in fiber composites, in adhesives, in electrolaminates and in powder coatings.

17. Articles containing a reactive composition according to any of Claims 1 to 15.

## Revendications

1. Composition réactive, contenant essentiellement
A) au moins une résine époxyde ;
B) au moins un durcisseur latent, qui présente lors de la réaction non catalysée avec le composant A), dans une DSC (calorimétrie différentielle par balayage), le maximum du pic de réaction exothermique à des températures supérieures à 150°C ;
C) au moins un accélérateur, constitué par la combinaison
C1) de sels d'ammonium quaternaires présentant des acides aromatiques comme contre-ion et
C2) d'un acide monomère ou polymère, organique ou inorganique.

2. Composition réactive selon la revendication 1, **caractérisée en ce que**
D) d'autres adjuvants usuels sont contenus.

3. Composition réactive selon au moins l'une quelconque des revendications précédentes, **caractérisée en ce qu'**elle contient des résines époxydes A) de glycidyléthers à base de bisphénols à base de type A ou F et/ou à base de résorcinol et/ou de tétrakisphényloléthane et/ou de novolaques de type phénol/crésol-formaldéhyde.

4. Composition réactive selon au moins l'une quelconque des revendications précédentes, **caractérisée en ce qu'**elle contient des résines époxydes A) à base de bisphénol A-diglycidyléther, des résines époxydes à base de bisphénol F-diglycidyléther et/ou de types cycloaliphatiques.

5. Composition réactive selon au moins l'une quelconque des revendications précédentes, **caractérisée en ce qu'**elle contient, comme durcisseur latent B), des guanidines substituées et/ou des amines aromatiques.

6. Composition réactive selon au moins l'une quelconque des revendications précédentes, **caractérisée en ce qu'**elle contient, comme durcisseur latent B), du 3,3'-diaminodiphénylsulfone, de la 4,4'-méthylènediamine, de la 1,2-benzènediamine ou de la 1,3-benzènediamine ou de la 1,4-benzènediamine, du bis-(4-aminophényl)-1,4-diisopropylbenzène (par exemple EPON 1061 de Shell), du bis-(4-amino-3,5-diméthylphényl)-1,4-diisopropylbenzène, du diaminodiphényléther, de la diaminobenzophénone, de la 2,6-diaminopyridine, de la 2,4-toluènediamine, des diaminodiphénylpropanes, du 1,5-diaminonaphtalène, des xylènediamines, du 1,1-bis-4-aminophénylcyclohexane, de la méthylène-bis-(2,6-diéthylaniline), de la méthylène-bis-(2-isopropyl-6-méthylaniline), de la méthylène-bis-(2,6-diisopropylaniline), de la 4-aminodiphénylamine, de la diéthyltoluènediamine, de la phényl-4,6-diaminotriazine et/ou de la lauryl-4,6-diaminotriazine.

7. Composition réactive selon au moins l'une quelconque des revendications précédentes, **caractérisée en ce qu'**elle contient, comme C1), des sels de tétraalkylammonium.

8. Composition réactive selon au moins l'une quelconque des revendications précédentes, **caractérisée en ce qu'**elle contient, comme C2), de l'acide sulfurique, de l'acide acétique, de l'acide benzoïque, de l'acide succinique, de l'acide malonique, de l'acide téréphtalique, de l'acide isophtalique, de l'acide oxalique, de l'acide borique ou des copolyesters ou des copolyamides présentant un indice d'acide d'au moins 20, seuls ou en mélanges.

9. Composition réactive selon au moins l'une quelconque des revendications précédentes, **caractérisée en ce qu'**elle contient, comme C2), de l'acide oxalique et/ou de l'acide succinique.

10. Composition réactive selon au moins l'une quelconque des revendications précédentes, **caractérisée en ce que** la quantité de C1), par rapport à la résine époxyde, est de 0,1-5% en poids.

11. Composition réactive selon au moins l'une quelconque des revendications précédentes, **caractérisée en ce que** la quantité de C2), par rapport à la résine époxyde, est de 0,01-10% en poids.

12. Composition réactive selon au moins l'une quelconque des revendications précédentes, **caractérisée en ce qu'**elle contient, comme additif, D), des solvants, des pigments, des adjuvants d'étalement, des agents de matage et/ou des accélérateurs.

13. Composition réactive selon au moins l'une quelconque des revendications précédentes, présentant une stabilité à l'entreposage, l'augmentation de la viscosité après 8 heures à 60°C n'étant pas 50% supérieure à la valeur de départ.

14. Composition réactive selon au moins l'une quelconque des revendications précédentes, la composition selon l'invention étant au moins d'une réactivité telle qu'après 30 minutes à 140°C, une réticulation complète ait eu lieu.

15. Procédé pour la préparation de la composition réactive selon les revendications 1 à 14 par homogénéisation.

16. Utilisation de la composition réactive selon les revendications 1 à 15 dans des matériaux composites fibreux, dans des adhésifs, dans des électrolaminés ainsi que dans des laques en poudre.

17. Objets contenant une composition réactive selon les revendications 1 à 15.
